# EUROPÄISCHE PATENTSCHRIFT

(11) **EP 2 026 156 B1**
(45) Veröffentlichungstag und Bekanntmachung des Hinweises auf die Patenterteilung: **30.09.2009**
(21) Anmeldenummer: 07016035.3
(22) Anmeldetag: 16.08.2007
(51) Int. Cl.: G05B 19/418, F15B 13/00

(54) **Modularanordnung mit in einer Reihenrichtung aneinandergereihten Modulen, die wenigstens teilweise als Ventilmodule ausgebildet sind**
Modular assembly with modules arranged in rows and designed at least in part as valve modules
Agencement modulaire doté de modules rangés les uns sur les autres dans un dispositif de série, formés au moins en partie en tant que module de robinet

(43) Veröffentlichungstag der Anmeldung: 18.02.2009
(73) Patentinhaber: FESTO AG & Co. KG, 73734 Esslingen (DE)
(72) Erfinder: Kremser, Rolf, Dipl.-Ing. (FH), 73033 Göppingen (DE); Gienger, Bernd, Dipl.-Ing. (BA), 73235 Weilheim (DE); Ziegele, Achim, Dipl.-Ing. (FH), 73066 Uhingen-Baiereck (DE); Gräff, Uwe, Dipl.-Ing. (FH), 73760 Ostfildern (DE)
(74) Vertreter: Vetter, Hans

(56) Entgegenhaltungen:
- EP-B- 1 464 843
- DE-A1- 10 061 686

## Beschreibung

Die Erfindung betrifft eine Modulanordnung mit in einer Reihenrichtung aneinandergereihten Modulen, die wenigstens teilweise als Ventilmodule ausgebildet sind, wobei ein Modul als Steuermodul ausgebildet ist und mit den anderen Modulen über quer durch diese Module verlaufende Steuer- und/oder Sensorleitungen verbunden ist, und mit quer durch die Module verlaufenden Spannungsversorgungsleitungen, die von einer Spannungsquelle gespeist werden.

Derartige Modulanordnungen oder Ventilbatterien sind beispielsweise aus der EP 1272767 B1, der EP 1464843 B1 oder der EP 1183472 B1 bekannt und dienen zur Steuerung einer Vielzahl von fluidischen Aktoren, wobei zugeordnete Sensorsignale rückgemeldet werden können. Überwachungsvorrichtungen und Diagnosesysteme für solche fluidischen Anordnungen sind ebenfalls in verschiedenen Variationen bekannt. Die im Fehlerfall durchzuführende Abschaltung erfolgt durch äußere Komponenten, wobei insbesondere unterschiedliche Abschaltungsbereiche zu aufwendigen und kompliziert zu installierenden und zu wartenden Anordnungen führen.

Eine Aufgabe der vorliegenden Erfindung besteht darin, eine Modulanordnung der eingangs genannten Gattung mit einer Sicherheitseinrichtung so zu versehen, dass insgesamt eine kompakte Anordnung mit geringer Komplexität erreicht wird.

Diese Aufgabe wird erfindungsgemäß durch eine Modulanordnung mit den Merkmalen des Anspruchs 1 gelöst.

In vorteilhafter Weise ist ein Sicherheitsmodul in der Modulanordnung integriert, sodass die Abschaltung von Modulen in sicherheitskritischen Fällen intern erfolgt. Dies führt zu einer kompakten Anordnung. Dabei können in einfacher Weise nicht abschaltende und abschaltende Bereiche festgelegt werden. Durch einfache Platzierung des Sicherheitsmoduls in der Reihenanordnung kann festgelegt werden, welche Module in sicherheitsrelevanten Fällen abschalten sollen. Werden mehrere Sicherheitsmodule in der Modulanordnung eingesetzt, so können unterschiedliche Bereiche unterschiedliche Abschaltkriterien aufweisen.

Durch die in den Unteransprüchen aufgeführten Maßnahmen sind vorteilhafte Weiterbildungen und Verbesserungen der im Anspruch 1 angegebenen Modulanordnung möglich.

In vorteilhafter Weise sind über das Sicherheitsmodul spannungsversorgte Module und unabhängig davon spannungsversorgte Module vorgesehen, wobei die unabhängig versorgten Module zwischen dem Sicherheitsmodul und einem mit der Spannungsquelle verbundenen Modul und/oder an einem die internen Spannungsversorgungsleitungen ständig unterbrechenden Trennmodul aneinandergereiht sind, wobei das Trennmodul an die Spannungsquelle angeschlossen ist. Dies führt zu einer großen Variabilität hinsichtlich der Anordnung der Module und der Abschaltkriterien.

Zweckmäßigerweise ist das Steuermodul mit der Spannungsquelle verbunden oder verbindbar oder enthält die Spannungsquelle, wobei sie dann einen entsprechenden Spannungsanschluss für die Spannungsquelle besitzt. Da das Steuermodul ständig mit der Versorgungsspannung verbunden sein sollte, ist diese Lösung favorisiert.

Zur Verbindung mit einer externen Steuereinrichtung besitzt das Steuermodul zweckmäßigerweise einen Busanschluss, der über einen Busknoten und gegebenenfalls über eine Steuerelektronik mit den durch die Module verlaufenden Steuer- und/oder Sensorleitungen verbunden ist. Eine solche interne Steuerelektronik ist zur Ausführung wenigstens eines Teils der Steuerfunktionen ausgebildet, wobei eine mit dem Busanschluss verbundene externe Steuereinrichtung je nach Wunsch Steuerfunktionen und/oder Programmierfunktionen durchführen kann.

Die sicherheitsrelevanten Steuer- und/oder Diagnosemittel können im Steuermodul und/oder im Sicherheitsmodul und/oder in der extern mit dem Steuermodul verbundenen Steuereinrichtung angeordnet sein, wobei sicherheitsrelevante Funktionen oder Diagnosefunktionen auch verteilt angeordnet sein können.

In einer vorteilhaften Weiterbildung der Erfindung ist wenigstens ein durch das Sicherheitsmodul steuerbares Sicherheitsventil vorgesehen, das als Entlüftungs- und/oder Sperrventil für die Ventilmodule ausgebildet ist, je nachdem, ob in den Ventilmodulen oder den daran angeschlossenen Aktoren eine Entlüftung stattfinden soll oder der jeweils vorliegende Druck aufrechterhalten werden soll. Dieses wenigstens eine Sicherheitsventil kann als externes Ventil und/oder als Ventilmodul der Modulanordnung ausgebildet sein.

In vorteilhafter Weise sind elektrische Module der Modulanordnung mit Steuer- und/oder Sensoranschlüssen versehen, um Aktoren steuern zu können und Sensorrückmeldungen dem Steuermodul rückmelden zu können.

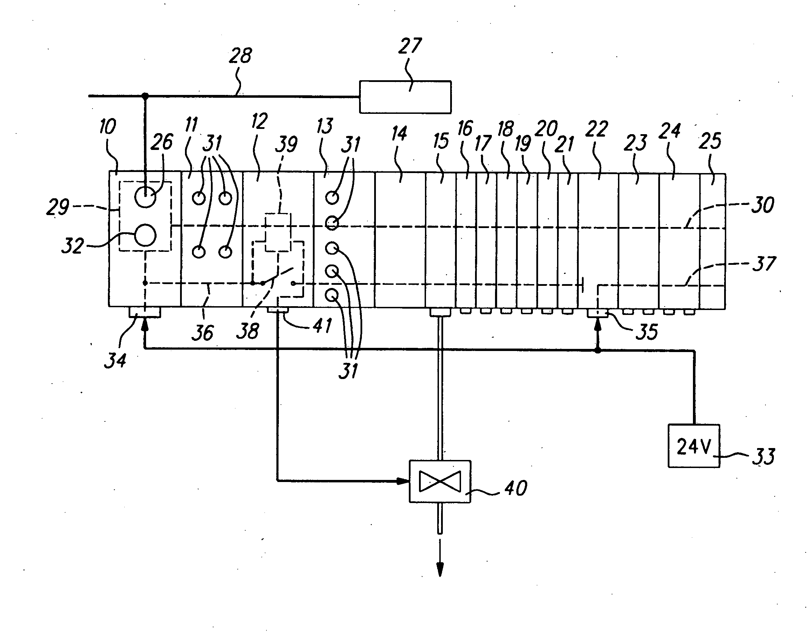

Ein Ausführungsbeispiel der Erfindung ist in der Zeichnung dargestellt und in der nachfolgenden Beschreibung näher erläutert. Die einige Figur zeigt schematisch eine Modulanordnung mit einem Steuermodul, einem Sicherheitsmodul, einem Trennmodul, mehreren elektrischen Modulen und mehreren Ventilmodulen.

Die in der einzigen Figur als Ausführungsbeispiel dargestellte Modulanordnung besteht aus einer Vielzahl von in einer Reihenrichtung aneinandergereihten Modulen. Derartige Anordnungen werden auch als Ventilbatterien bezeichnet. Diese Module können beispielsweise an einer Schiene oder einem Grundkörper aufgereiht sein oder lediglich miteinander verbunden sein.

Von links nach rechts besteht die Modulanordnung aus den folgenden Modulen: ein Steuermodul 10, ein erstes elektrisches Modul 11, ein Sicherheitsmodul 12, ein zweites elektrisches Modul 13, ein Pneumatik-Verbindungsmodul 14, ein Entlüftungsmodul 15, sechs Ventilmodule 16-21, ein Trennmodul 22, zwei Doppelventilmodule 23, 24 und ein Abschlussmodul 25.

Das Steuermodul 10 besitzt einen Busanschluss 26 zur Verbindung mit einer externen Steuereinrichtung 27 beziehungsweise Steuerzentrale über einen externen Bus 28. Dieser Busanschluss 26 ist im Steuermodul 10 mit einem Busknoten 29 verbunden, von dem aus interne Steuer- und/oder Sensorleitungen 30 quer durch alle angereihten Module 11-25 verlaufen. Hierbei kann es sich um parallele und/oder serielle Leitungen handeln, wobei im Falle von seriellen Leitungen diese als interne Busleitungen ausgebildet sind. Über diese Steuer- und/oder Sensorleitungen 30 werden die angeschlossenen Ventilmodule 16-21 beziehungsweise Doppelventilmodule 23, 24 gesteuert. Weiterhin können nicht dargestellte, externe, an Anschlüsse 31 der elektrischen Module 11, 13 angeschlossene Aktoren in entsprechender Weise gesteuert werden, wobei Sensorrückmeldungen ebenfalls über diese Anschlüsse 31 dem Steuermodul 10 rückgemeldet werden. Weiterhin wird das Sicherheitsmodul 12 in später noch näher beschriebener Weise gesteuert.

Der Busknoten 29 kann auch eine Steuerelektronik aufweisen, um die beschriebenen Steuerfunktionen wenigstens teilweise durchführen zu können. Im Übrigen kann die Steuerung auch über den externen Bus 28 durch die externe Steuereinrichtung 27 erfolgen. Entsprechend werden die Sensorrückmeldungen der Steuerelektronik des Busknotens 29 und/oder der externen Steuereinrichtung 27 zugeführt.

Das Steuermodul 10 weist noch einen zweiten Busanschluss 32 auf. An diesen können weitere Steuermodule von weiteren Modulanordnungen oder anderen Steuereinrichtungen angeschlossen werden, um eine Verbindung zum externen Bus 28 herzustellen.

Eine externe Spannungsquelle 33 ist zur Spannungsversorgung mit entsprechenden Anschlüssen 34, 35 des Steuermoduls 10 und des Trennmoduls 22 verbunden. Vom Steuermodul 10 aus verlaufen entsprechende, mit dem Anschluss 34 verbundene Spannungsversorgungsleitungen 36 zur Spannungsversorgung quer durch die Module 11-21, wobei der Anschluss 34 auch mit dem Busknoten 29 zu dessen Spannungsversorgung verbunden ist.

Das Trennmodul 22 unterbricht diese internen Spannungsversorgungsleitungen 36, wobei sein Anschluss 35 mit internen Spannungsversorgungsleitungen 37 verbunden ist, die quer durch die Doppelventilmodule 23, 24 verlaufen, um deren unabhängige Spannungsversorgung sicherzustellen.

Das Sicherheitsmodul 12 besitzt eine Schaltanordnung 38, mittels der die Spannungsversorgungsleitungen 36 zu den Modulen 13-21 unterbrochen werden können. Hierzu besitzt das Sicherheitsmodul 12 eine Steuerelektronik 39 zur Steuerung der Schaltanordnung 28, also zur Unterbrechung der Spannungsversorgungsleitungen 36, wenn kritische oder sicherheitsrelevante Zustände durch eine Steuer- und/oder Diagnoseeinrichtung erkannt worden sind. Diese Steuer- und/oder Diagnoseeinrichtung kann in der Steuerelektronik 39 des Sicherheitsmoduls 12 oder in der Steuerelektronik des Steuermoduls 10 oder in der externen Steuereinrichtung 27 angeordnet sein, wobei die entsprechenden Steuer- beziehungsweise Diagnosefunktionen auch verteilt angeordnet sein können. Durch die Unterbrechung der Spannungsversorgungsleitungen 36 durch Betätigung der Schaltanordnung 38 werden die Module 13-21 abgeschaltet beziehungsweise je nach Modulausführung in einen jeweils sicheren Zustand übergeführt. Ein solcher Zustand im spannungslosen Zustand kann je nach Funktion unterschiedlich ausgestaltet sein.

Das Steuermodul 10 und das erste elektrische Modul 11 sind von einer Sicherheitsabschaltung nicht betroffen. Dasselbe gilt für die Doppelventilmodule 23, 24, die über das Trennmodul 22 separat mit der Versorgungsspannung beaufschlagt werden. Bei der Zusammenstellung der Modulanordnung kann somit durch die Anordnung der Module festgelegt werden, welche Module in sicherheitsrelevanten Fällen abgeschaltet werden sollen und welche auch dann noch mit Spannung versorgt werden sollen.

Es ist auch möglich, mehrere unterschiedliche Bereiche durch verschiedene Sicherheitsmodule 12 nach unterschiedlichen Kriterien abzuschalten beziehungsweise in einen sicheren Zustand zu bringen.

Die Spannungsquelle 33 kann auch beispielsweise in einem Modul, wie dem Steuermodul 10, integriert sein, wobei dann eine direkte Verbindung zum Trennmodul 22 gewährleistet sein muss. Die Spannungsquelle 33 oder eine interne Spannungsquelle kann auch unterschiedliche Spannungen für unterschiedliche Bedürfnisse der Module bereitstellen. Im Allgemeinen ist dies eine Spannung von 24 Volt. Die Spannungsquelle 33 benötigt selbstverständlich in jedem Falle einen Netzanschluss oder einen sonstigen Spannungsanschluss zur Spannungszuführung.

Das Trennmodul 22 ist ein optionales Modul. Die Doppelventilmodule 23, 24 könnten auch zwischen dem Sicherheitsmodul 12 und dem Steuermodul 10 angeordnet sein. Je nach Zahl der Module der Modulanordnung können jedoch Bereiche mit separater Spannungsversorgung sinnvoll sein.

Das Entlüftungsmodul 15 dient der Entlüftung der Ventilmodule 16-21 beziehungsweise Doppelventilmodule 23, 24 und ist an entsprechende pneumatische Verbindungsleitungen oder Zuführleitungen angeschlossen. Dieses Entlüftungsmodul 15 ist mit einem externen Entlüftungsventil 40 verbunden, das über einen Anschluss 41 am Sicherheitsmodul 12 von dessen Steuerelektronik 39 betätigbar ist. Im sicherheitsrelevanten Fall, also wenn die Schaltanordnung 38 die Spannungsversorgungsleitungen 36 unterbricht, wird zusätzlich das Entlüftungsventil 40 betätigt, um die Ventilmodule 16-21 beziehungsweise Doppelventilmodule 23, 24 über das Entlüftungsmodul 15 zu entlüften. Dieses Entlüftungsventil 40 kann prinzipiell auch im Entlüftungsmodul 15 integriert sein und kann dann über die Steuer- und/oder Sensorleitungen 30 oder über separate interne Leitungen gesteuert werden. Eine Steuerung unabhängig von der Schaltanordnung 38 ist ebenfalls möglich.

Das Entlüftungsventil 40 kann auch als Sperrventil ausgebildet sein oder es kann wenigstens ein zusätzliches Sperrventil vorgesehen sein. Bei manchen fluidischen Anwendungen ist es nämlich im Sicherheitsfall besser, den herrschenden Druck aufrechtzuerhalten und keine Entlüftung herbeizuführen. Dies ist beispielsweise beim Einsatz von Sauggreifern der Fall, die sich bei einer Entlüftung in möglicherweise unerwünschter Weise lösen würden. Ist sowohl eine Entlüftung für einen Teil der Ventilmodule und die Aufrechterhaltung des herrschenden Drucks bei einem anderen Teil der Module im sicherheitsrelevanten Fall wünschenswert, so können solche Ventilmodule in Gruppen zusammengefasst und jeweils einem Entlüftungsventil beziehungsweise Sperrventil zugeordnet werden. Dabei hängt es jeweils von der Art der angeschlossenen Aktoren ab, zu welchen Gruppen die Ventilmodule zusammengefasst werden sollen, wobei auch Einzelzuordnungen möglich sind.

Zur Vereinfachung der Darstellung wurden die Fluidzuführungen und andere fluidische Details des fluidischen Bereichs der Modulanordnung nicht dargestellt. Hierzu wird auf den eingangs angegebenen Stand der Technik verwiesen.

## Patentansprüche

1. Modulanordnung mit in einer Reihenrichtung aneinandergereihten Modulen (10-25), die wenigstens teilweise als Ventilmodule (16-21, 23, 24) ausgebildet sind, wobei ein Modul als Steuermodul (10) ausgebildet ist und mit den anderen Modulen (11-25) über quer durch diese Module verlaufende Steuer-und/oder Sensorleitungen (30) verbunden ist, und mit quer durch die Module (10-25) verlaufenden Spannungsversorgungsleitungen (36, 37), die von einer Spannungsquelle (33) gespeist werden, **dadurch gekennzeichnet, dass** wenigstens ein Modul als Sicherheitsmodul (12) ausgebildet ist und Schaltmittel (38) für die durchlaufenden Spannungsversorgungsleitungen (36) besitzt, wobei sicherheitsrelevante Steuerund/oder Diagnosemittel zur Betätigung der Schaltmittel (38) vorgesehen sind und diese zur Unterbrechung der Spannungsversorgungsleitungen (36) zu den über das Sicherheitsmodul (12) versorgten Modulen (13-21) im betätigten Zustand ausgebildet sind.

2. Modulanordnung nach Anspruch 1, **dadurch gekennzeichnet, dass** über das Sicherheitsmodul (12) spannungsversorgte Module (13-21) und unabhängig davon spannungsversorgte Module (10, 11, 23, 24) vorgesehen sind, wobei die unabhängig versorgten Module (10, 11, 23, 24) zwischen dem Sicherheitsmodul (12) und einem mit der Spannungsquelle (33) verbundenen Modul (10) und/oder an einem die internen Spannungsversorgungsleitungen (36, 37) ständig unterbrechenden Trennmodul (22) aneinandergereiht sind, wobei das Trennmodul (22) an die Spannungsquelle (33) angeschlossen ist.

3. Modulanordnung nach Anspruch 1 oder 2, **dadurch gekennzeichnet, dass** das Steuermodul (10) mit der Spannungsquelle (33) verbunden oder verbindbar ist oder die Spannungsquelle enthält und einen Spannungsanschluss (34) für dieselbe besitzt.

4. Modulanordnung nach einem der vorhergehenden Ansprüche,
**dadurch gekennzeichnet, dass** das Steuermodul (10) einen Busanschluss (26) zur Verbindung mit einer externen Steuereinrichtung (27) besitzt und die durch die Module (11-25) verlaufenden Steuer- und/oder Sensorleitungen (30) über einen Busknoten (29) mit dem Busanschluss (26) verbunden sind.

5. Modulanordnung nach einem der vorhergehenden Ansprüche,
**dadurch gekennzeichnet, dass** das Steuermodul (10) eine Steuerelektronik enthält.

6. Modulanordnung nach einem der vorhergehenden Ansprüche,
**dadurch gekennzeichnet, dass** die sicherheitsrelevanten Steuer- und/oder Diagnosemittel im Steuermodul (10) und/oder im Sicherheitsmodul (12) und/oder in einer externen, mit dem Steuermodul (10) verbundenen Steuereinrichtung (27) angeordnet sind.

7. Modulanordnung nach einem der vorhergehenden Ansprüche,
**dadurch gekennzeichnet, dass** wenigstens ein durch das Sicherheitsmodul (12) steuerbares Sicherheitsventil (40) vorgesehen ist, das als Entlüftungs- und/oder Sperrventil für die Ventilmodule (16-21, 23, 24) ausgebildet ist

8. Modulanordnung nach Anspruch 7, **dadurch gekennzeichnet,**
**dass** das wenigstens eine Sicherheitsventil (40) als externes Ventil und/oder als Ventilmodul der Modulanordnung ausgebildet ist.

9. Modulanordnung nach einem der vorhergehenden Ansprüche,
**dadurch gekennzeichnet, dass** elektrische Module (11, 13) der Modulanordnung mit Steuer- und/oder Sensoranschlüssen (31) versehen sind.

10. Modulanordnung nach einem der vorhergehenden Ansprüche,
**dadurch gekennzeichnet, dass** die Spannungsquelle als externe oder interne Spannungsquelle ausgebildet ist.

## Claims

1. Module assembly with modules (10-25) lined up side by side and partly in the form of valve modules (16-21, 23, 24), wherein one module is designed as control module (10) and is connected to the other modules (11-25) via control and/or sensor lines (30) running transversely through these modules, and with voltage supply lines (36, 37) supplied from a voltage source (33) and running transversely through the modules (10-25), **characterised in that** at least one module is designed as safety module (12) and has switching means (38) for the voltage supply lines (36) running through it, wherein safety-relevant control and/or diagnostic means are provided to actuate the switching means (38) which are designed in the actuated state to interrupt the voltage supply lines (36) to the modules (13-21) supplied through the safety module (12).

2. Module assembly according to claim 1, **characterised in that** modules (13-21) supplied with voltage via the safety module (12) and modules (10, 11, 23, 24) supplied with voltage independently of the safety module are provided, wherein the independently supplied modules (10, 11, 23, 24) are mounted side by side between the safety module (12) and a module (10) connected to the voltage source (33) and/or an isolating module (22) constantly interrupting the internal voltage supply lines (36, 37), wherein the isolating module (22) is connected to the voltage source (33).

3. Module assembly according to claim 1 or 2, **characterised in that** the control module (10) is connected or connectable to the voltage source (33), or contains the voltage source and has a voltage connection (34) for it.

4. Module assembly according to any of the preceding claims, **characterised in that** the control module (10) has a bus connection (26) for connection to an external control device (27), and the control and/or sensor lines (30) running through the modules (11-25) are connected to the bus connection (26) via a bus node (29).

5. Module assembly according to any of the preceding claims, **characterised in that** the control module (10) contains control electronics.

6. Module assembly according to any of the preceding claims, **characterised in that** the safety-relevant control and/or diagnostic means are located in the control module (10) and/or in the safety module (12) and/or in an external control device (27) connected to the control module (10).

7. Module assembly according to any of the preceding claims, **characterised in that** there is provided at least one safety valve (40) which may be controlled by the safety module (12) and is in the form of a vent valve and/or non-return valve for the valve modules (16-21, 23, 24).

8. Module assembly according to claim 7, **characterised in that** the safety valve or valves (40) is/are in the form of an external valve and/or a valve module of the module assembly.

9. Module assembly according to any of the preceding claims, **characterised in that** electrical modules (11, 13) of the module assembly are provided with control and/or sensor connections (31).

10. Module assembly according to any of the preceding claims, **characterised in that** the voltage source is designed as an external or an internal voltage source.

## Revendications

1. Agencement modulaire avec des modules (10-15) juxtaposés dans une direction d'alignement, qui sont conformés au moins partiellement en modules de vanne (16-21, 23, 24), un module étant conformé en module de commande (10) et étant relié aux autres modules (11-25) par l'intermédiaire de lignes de commande et/ou de capteurs (30) s'étendant à travers ces modules, et avec des lignes d'alimentation en tension (36, 37) s'étendant transversalement à travers les modules (10-25), lignes qui sont alimentées par une source de tension (33), **caractérisé en ce qu'**au moins un module est conformé en module de sécurité (12) et possède des moyens de commutation (38) pour les lignes continues d'alimentation en tension (36), des moyens de commande et/ou de diagnostic relatifs à la sécurité étant prévus pour actionner les moyens de commutation (38) et ceux-ci étant conformés pour, à l'état actionné, interrompre les lignes d'alimentation en tension (36) en direction des modules (13-21) alimentés par l'intermédiaire du module de sécurité (12).

2. Agencement modulaire selon la revendication 1, **caractérisé en ce que** des modules (13-21) alimentés en tension par l'intermédiaire du module de sécurité (12) et des modules (10, 11, 23, 24) alimentés en tension indépendamment de lui sont prévus, les modules (10, 11, 23, 24) alimentés indépendamment étant juxtaposés entre le module de sécurité (12) et un module (10) relié à la source de tension (33) et/ou avec un module de séparation (22) interrompant en permanence les lignes internes d'alimentation en tension (36, 37), le module de séparation (22) étant raccordé à la source de tension (33).

3. Agencement modulaire selon la revendication 1 ou 2, **caractérisé en ce que** le module de commande (10) est relié ou peut être relié à la source de tension (33) ou contient la source de tension et possède un raccordement de tension (34) pour celle-ci.

4. Agencement modulaire selon l'une des revendications précédentes, **caractérisé en ce que** le module de commande (10) possède un raccordement de bus (26) pour la jonction avec un dispositif externe de commande (27) et les lignes de commande et/ou de capteurs (30) s'étendant à travers les modules (11-25) sont reliées au raccordement de bus (26) par l'intermédiaire d'un noeud de bus (29).

5. Agencement modulaire selon l'une des revendications précédentes, **caractérisé en ce que** le module de commande (10) contient une électronique de commande(10).

6. Agencement modulaire selon l'une des revendications précédentes, **caractérisé en ce que** les moyens de commande et/ou de diagnostic relatifs à la sécurité sont placés dans le module de commande (10) et/ou dans le module de sécurité (12) et/ou dans un dispositif de commande externe (27) relié au module de commande.

7. Agencement modulaire selon l'une des revendications précédentes, **caractérisé en ce qu'**au moins une vanne de sécurité (40) pouvant être commandée par le module de sécurité (12) est prévue, qui est conformée en vanne d'évacuation d'air et/ou en vanne de fermeture pour les modules de vanne (16-21, 23, 24).

8. Agencement modulaire selon la revendication 7, **caractérisé en ce que** la vanne de sécurité (40) au nombre d'une au moins est conformée en vanne externe et/ou en module de vanne de l'agencement modulaire.

9. Agencement modulaire selon l'une des revendications précédentes, **caractérisé en ce que** des modules électriques (11, 13) de l'agencement modulaire sont munis de branchements de commande et/ou de branchements de capteurs (31).

10. Agencement modulaire selon l'une des revendications précédentes, **caractérisé en ce que** la source de tension est conformée en source de tension externe ou interne.
